# EUROPEAN PATENT APPLICATION

(11) **EP 1 354 793 A2**
(43) Date of publication of application: **22.10.2003**
(21) Application number: 03006372.1
(22) Date of filing: 20.03.2003
(51) Int. Cl.: B62M 25/04, B62K 23/06, B62K 23/04

(54) **Barend mounted twist shifter with integrated brake actuator for bicycle**

(30) Priority: 20.03.2002 US 367435 P
(71) Applicant: Ritchey Designs, Redwood City, CA 94063 (US)
(72) Inventor: Ritchey, Thomas, W., CA 94306 Palo Alto (US)
(74) Representative: Betten & Resch

(57) **Abstract**

A barend mounted twist shifter provides for ergonomic shifting and eventual brake actuation. The barend (103), which commonly provides an ergonomic hold on position for a bike rider's hands (104) at the peripheral handlebar ends provides for an attaching location for the inventive twist shifter. Consequently, a bike rider may operate the bike's derailleur without taking his hands from the barends. A brake actuator (207) may be combined with the twist shifter. The shifter's spool (401,902,1002) around which the shifter cable (404) coils, may be positioned in the assembly adjacent the barend's tip. Its minimum diameter is substantially independent from the barend's outside diameter and may be reduced such that the actuation torque on the gripdrum (206) may be lowered as well. The gripdrum (206) and spool (401,902,1002) may be combined with a ratchet mechanism that may be easily integrated in the shifter's housing (701,801) adjacent the barend's tip. A thumb perch (601) serves as a release for down shifting.

## Description

### Field of Invention

The present invention relates to a shifting device and particularly to a shifting device for a bicycle and more particular to handlebar-mounted devices with integrated twist shifter and brake actuator. The present invention also relates to a barend for mounting at the peripheral ends of a handle bar.

### Background of Invention

A bicycle may feature barends that are mounted at the peripheral ends of a handlebar. Such barends are commonly utilized to provide an ergonomic and comfortable position of the bike rider's hands. Barends conventionally are somewhat perpendicular orientated relative to a protrusion direction of the handlebar. The barends point with their outside diameter and their tips substantially in the steering direction. To the contrary, brake levers and shifters are still centrally placed at the laterally protruding portion of the handlebar close to the bicycle's steering column. Thus, even though barend extensions provide a comfortable grip contact with the handlebar, they have limited utility since hand positions have to be changed every time that braking or shifting is performed. Therefore, a need exists for a device that provides shifting and brake actuation at the barends.

Twist shifters provide a means for transforming a rotating hand motion around the handlebar into a derailleur actuation. Prior art shifting devices are actuated via a gripdrum that is mounted rotatable around the handlebar. A derailleur is commonly remotely actuated from the frontal portion of the bicycle via a pulling cable that is guided in a pulling force opposing fashion in a flexible tubular housing. A performance critical factor of the shifter-cable-derailleur assembly is the amount of cable pull initiated by actuating the gripdrum. In common prior art twist shifters, the gripdrum is rotationally rigidly combined with a spool at which the cable end is attached and around which the cable coils when the gripdrum is rotated.

A derailleur is commonly spring loaded, which is necessary to keep the cable under tension and to perform a downshifting when the shifter cable is released. During up shifting, when the cable is pulled, the spring load of the derailleur and friction in the mechanism needs to be overcome by the operating bike rider. Because of debris that usually accumulates in the joints and sliding parts of the shifter-cable-derailleur assembly, the required cable pull force may increase drastically. To keep the actuating torque at the gripdrum to a minimum, it is desirable to have the spool diameter as small as possible. A miniaturization of the spool diameter is limited by the handlebar's outside diameter, which in turn is defined by strength and stiffness requirements of the handlebar. Attempts have been made in the prior art to overcome this limitation by introducing additional transmission elements in the twist shifter. Unfortunately, additional transmission elements make the twist shifter heavier, less reliable and more costly to fabricate. Hence, there exists a need for a twist shifter that provides a direct cable pull via a spool rotatable connected to a gripdrum that rotates around a profile onto which a bike rider may hold on during bike riding. In addition, the desired minimal diameter of the twist shifter's spool should not be limited by that profile's outside diameter as is the case with prior art twist shifters. The present invention addresses this need.

Twist shifters have to provide a relatively large angular movement range of the gripdrum to accommodate for the ever-increasing number of required gear shifting positions. Unfortunately, a human's wrist has only a limited flexibility. A ratchet mechanism combined with the gripdrum may solve that problem. Unfortunately, in prior art twist shifters, the design space for such ratchet mechanism is significantly compromised by the handlebar around which the twist shifter is assembled. The available design space is further limited in handlebar direction by a common presence of a brake lever clamped onto the handlebar next to the twist shifter. Therefore, there exists a need for a twist shifter that may utilize a ratchet mechanism without limitations imposed by the handlebar and/or an adjacently clamped brake actuator. The present invention addresses this need.

### Summary of Invention

A twist shifter is introduced that is configured for attaching and operating at a barend's tip. In that way, the bike rider may actuate a derailleur of the bicycle without taking his/her hands from the barends. The twist shifter may be combined with a brake actuator to provide brake actuation together with derailleur actuation in an ergonomic fashion.

The barend's tips are conventionally open ended and have to comply with relatively low strength and stiffness requirements. The twist shifter of the present invention takes advantage of this fact in various embodiments. In a preferred embodiment, the twist shifter is clamped on the inside of a hollow barend through the barend's open tip. The spool may thereby rotate around the internal clamping feature, thus making its minimum diameter highly independent from the barend's outside diameter.

In another embodiment, a ratchet mechanism is integrated in the twist shifter with a thumb perch actuated ratchet release. Since the twist shifter design is not hampered by the handlebar protruding all the way through the shifter, the ratchet mechanism may be freely designed adjacent the barend's tip and extending within the outside diameter of the barend.

The twist shifter may be configured to fit onto standardized barends. The twist shifter may be also configured in combination with a barend, which may be fabricated with specific features on its tips that may serve for attaching and/or as functional parts of the twist shifter. The barends themselves may be integral part of a handlebar or may be together with the inventive shifter be an independent unit readily attachable at the peripheral ends of the handlebar.

In accordance with the invention, a shifting device is provided. The shifting device comprises a housing configured for positioning at a tip of a profile and for attaching to said profile and a gripdrum rotatable combined with said housing for a rotatable access of said gripdrum around an outside diameter of said profile during said positioning of said housing, The device further comprises a spool in a functional connection with said gripdrum and rotatable embedded in said housing for pulling a derailleur actuating cable, said spool having a bushing diameter being smaller than said outside diameter.

In accordance with another aspect of the invention, a combined shifting and braking actuator is provided. The combined shifting and braking actuator comprises a shifting device and a brake actuator combined with a housing of the shifting device such that a brake lever is ergonomically accessed by a hand operating the grip drum of the shifting device. The shifting device further comprises a housing configured for positioning at a tip of a profile and for attaching to said profile, a gripdrum rotatable combined with said housing for a rotatable access of said gripdrum around an outside diameter of said profile during said positioning of said housing, and a spool in a functional connection with said gripdrum and rotatable embedded in said housing for pulling a derailleur actuating cable, said spool having a bushing diameter being smaller than said outside diameter.

In accordance with another aspect of the invention, a barend mounted twist shifter for ergonomic shifting and eventual brake actuation is provided. The barend, which commonly provides an ergonomic hold on position for a bike rider's hands at the peripheral handlebar ends provides for an attaching location for the inventive twist shifter. Consequently, a bike rider may operate the bike's derailleur without taking his hands from the barends. In an embodiment, a brake actuator is combined with the twist shifter. In the same or another embodiment, the shifter's spool around which the shifter cable coils, is positioned in the assembly adjacent the barend's tip. Its minimum diameter is substantially independent from the barend's outside diameter and may be reduced such that the actuation torque on the gripdrum may be lowered as well. According to an embodiment, the gripdrum and spool are combined with a ratchet mechanism that may be easily integrated in the shifter's housing adjacent the barend's tip. In another embodiment, a thumb perch serves as a release for down shifting.

### Brief Description of the Figures

**Fig. 1** shows a shaded view of a bicycle's front portion including a handlebar with peripherally attached barend extensions wherein each barend has a barend mounted twist shifter and brake actuator in accordance with the invention.
**Fig. 2** shows a perspective view of a first embodiment of a twist shifter with integrated brake actuator mounted on a tubular section representing a barend extension.
**Fig. 3** shows more details of the first embodiment of the invention, without the gripdrum and the tubular section shown, wherein the device is configured for clamping to the inside of the barend extension.
**Fig. 4** shows a second perspective view of the inventive device without the gripdrum and tubular section shown wherein an exemplary spool with an integrated spring is visible.
**Fig. 5** illustrates a second embodiment of the twist shifter with an integrated brake actuator wherein the barend extension is an integral part of the inventive device.
**Fig. 6** shows a further embodiment of the present invention, including a thumb perch that operates as a shifter release of a shifting ratchet.
**Fig. 7** shows another embodiment of the twist shifter with integrated brake actuator with an inverted spool direction of the shifter cable.
**Fig. 8** shows the second embodiment of the twist shifter with integrated brake actuator together with an inverted spool direction of the shifter cable.
**Fig. 9** shows a schematic perspective view of a first exemplary internal shifting mechanism.
**Fig. 10** shows a schematic perspective view of a second exemplary internal shifting mechanism.

### Description of the Invention

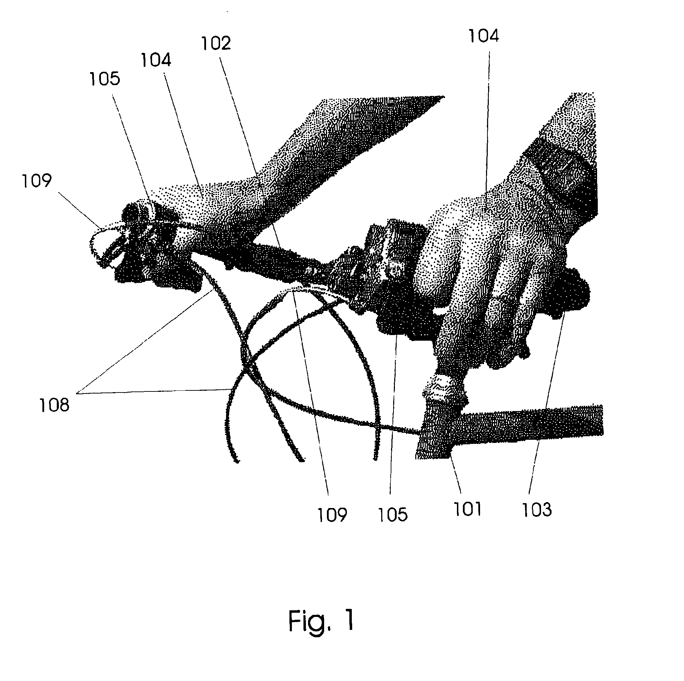

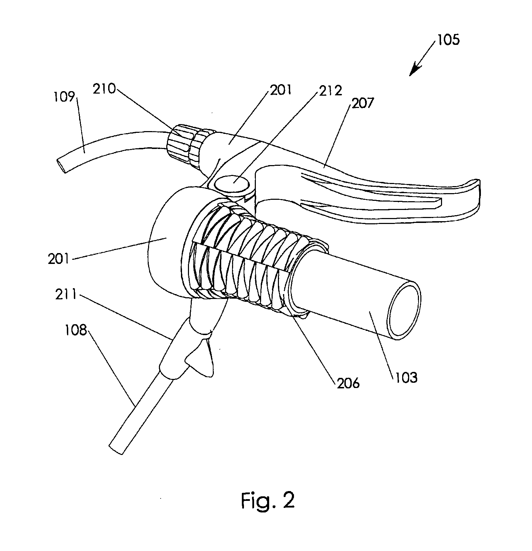

As illustrated in **Fig. 1**, a bicycle **101** has a well-known handlebar **102** with barends **103** attached on to each end of the handlebar 102 as is well known. The barends **103** may also be an integral part of the handlebar **102**. The hands **104** of a person riding the bicycle **101** may rest on the barends **103** as exemplarily depicted in **Fig. 1**. A device **105**, which provide for a preferred combined shifting and brake actuating functions, is placed at each end of the barends **103**. Each device **105** may preferably include a rotating gripdrum **206** (see **Figs. 2 - 8**) that provides the shifting function as described below and a brake lever **207** (see **Figs. 2- 8**) that provides the brake actuation function as described below. The gripdrum **206** and the brake lever **207** are configured and positioned for ergonomic and comfortable access and operation in a hand position as exemplarily depicted in **Fig. 1** so that the rider may perform both the shifting operations and brake actuation operations while his/her hands remain on the barends. Cable housings **108, 109** protrude from each of the devices **105** and internally guide cables to a brake (not shown) and a derailleur (not shown) in a well-known fashion.

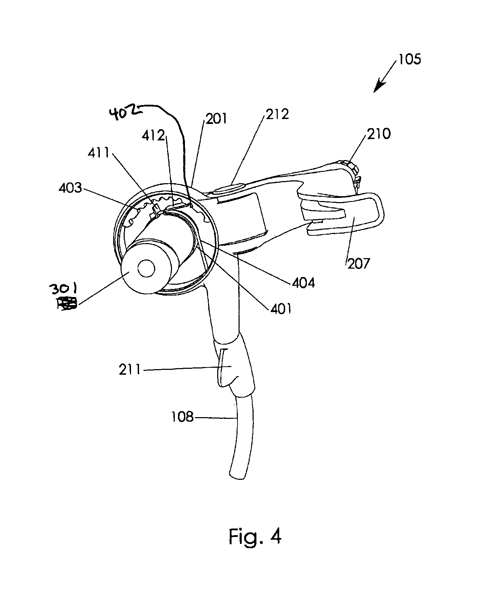

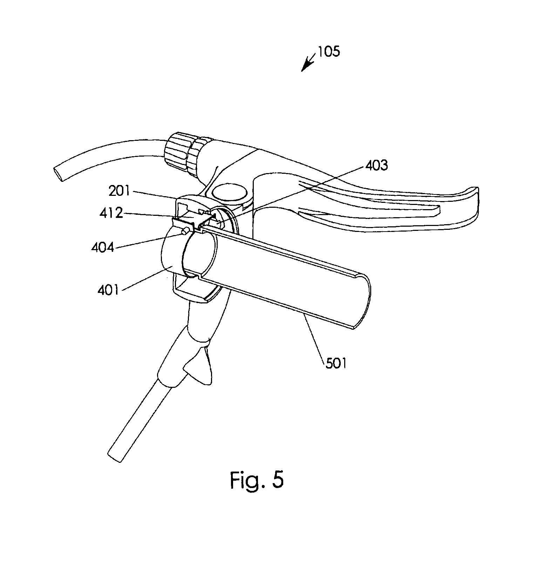

Now referring to **Fig. 2**, the main components of the device **105** are described. A housing structure **201** is shaped to hold a brake lever **207** that rotates about an axle **212**, encapsulate a well known shifting mechanism, retain the ends of the cable housings **108**, **109**, and guide a shifter cable **404** (see **Figs. 4, 5**) and a brake cable (not shown) in a well known fashion towards the cable housings **108**, **109**. The housing structure **201** may optionally include adjustment screws **210**, **211**, which are well known for adjusting brake and shifter motion.

The shifting operation is performed by rotating the gripdrum **206** around the barend **103**. For that purpose, the barend **103** has a straight cylindrical portion along the length of the gripdrum **206**. The cylindrical portion is mainly defined by its outside diameter. The gripdrum **206** is in a functional connection to a cable spool **401**, **902**, **1002** (see **Figs. 4, 5, 9, 10** below) of an internal shifting mechanism embedded inside the housing structure **201**, the inventive aspects of which are described in more detail with reference to **Figs. 4, 5**. A functional connection may include a monolithic connection, a snap connection and or a ratchet mechanism as described in more detail below. The integration of the shifting mechanism and the brake actuator inside the housing structure **201** provides for a close positioning of the gripdrum **206** relative to the axle or pivot pin **212** around which the brake lever **207** pivots. As a result, the hands **104** of a rider may be placed close to the pivot pin **212** such that the brake lever **207** is comfortably accessed. The integrated shifter and brake actuator provides additionally for compact and lightweight design. The integrated shifter and brake actuator in accordance with the invention permits a bicycle rider to rest his hands **104** on the barends **103** and operate the bicycle's brakes and derailleur simultaneously.

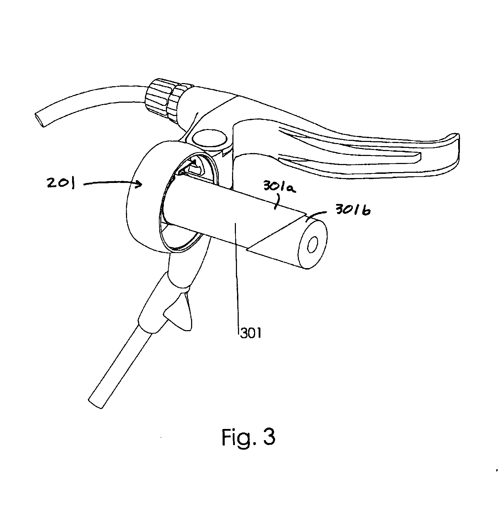

The placement of the device **105** at the end of a barend **103** provides for particular design advantages unattainable with prior art shifting devices mounted at the well-known central portion of the handlebar **102**. Firstly, as shown in Figure 3, the clamping of the device **105** may be accomplished inside of the barend **103**. In particular, the housing structure **201** may include an internal clamping mechanism **301** that, for example, transforms an axial force of a screw into a radial clamping force onto an inside diameter of a hollow barend **103** which may be carried out by any clamping mechanism including well known clamping mechanisms. For example, the clamping mechanism 301 may include a first portion 301a and a second portion 301b wherein the tightening of a screw (not shown) offsets the first portion from the second portion as shown which increases the effective diameter of the clamping mechanism. Thus, the device 105 with the internal clamping mechanism 301 is inserted into the barend and then the clamping mechanism 301 is tightened to secure the device 105 onto the barend. In the prior art, twist shifters are commonly clamped on the handlebar's circumference wherein a clamp embedded in the prior art shifter housing typically accomplishes this task. To the contrary, the present clamping mechanism **301** corresponds to the inside contour of the barend **103**. Since the clamping feature is put into the inside of the barend **103**, the housing structure **201** may be kept at a smaller width and/or scale than prior art shifter devices.

A second particular advantage of the present invention is that the shifting mechanism may be designed without dimensional constraints imposed by the outside diameter of the handle bar **102** and/or the barend **103.** These dimensional constraints, such as a particular diameter of the spool, are well-known in prior art twist shifters in which the shifting mechanism is designed to fit around the handlebar **102**. In particular, the rotation of the shifter is transmitted on the shifter cable via a well-known spool whereby the shifter cable is attached such that the cable wraps around the spool when the gripdrum is rotated. The diameter of the spool mainly influences the amount of torque that needs to be induced on the gripdrum for performing a shifting operation with a required cable pull force. Thus, a smaller spool diameter requires less torque to be induced on the gripdrum as may be well appreciated by anyone skilled in the art. In prior art cases, where the spool rotates around the handlebar, the diameter of the spool and hence the shifting torque reduction is limited by the handlebar's outside diameter. In the present invention, the device 105 is placed at the end of the barends **103** providing a bushing diameter of a spool **401**, **902**, **1002** (See Figures 4, 9 and 10) that may be smaller than the barend's **103** outside diameter. Preferably, the spool **401**, **902**, **1002** may rotate around a reduced diameter of the barend **103** or directly around the body of the clamping mechanism **301** as described below in more detail. The body of the clamping mechanism **301** may be accordingly configured with a continuously round shape and/or other well-known features and/or configurations for providing a well known bushing for the spool **401**, **902**, **1002**.

**Fig. 4** illustrates a preferred embodiment in which the spool **401** rotates directly around the clamping mechanism **301**. In particular, the shifter cable **404** is held with its end and resting on the circumference of the spool **401**. When the spool **401** is rotated via the gripdrum **206** in a cable pull direction, the cable **404** wraps around the spool **401** and a pulling force is induced on the cable and transmitted onto a derailleur (not shown). When the spool **401** is rotated via the gripdrum **206** in a cable release direction, the cable **404** uncoils from the spool **401** and the tension of the cable is released and pulled back by the spring loaded derailleur, which then performs a shifting operation in a direction opposite to that during cable pulling. When the device **105** is inserted into a barend and secured into position, the end of the barend abuts the spool **401** so that the spool **401** is able to rotate.

The shifter cable **404** exits the enclosure of the housing structure **201** and is internally guided through the adjustment screw **211** into the cable housing **108.** as is well-known for twist shifters. The spool **401** is rotating around the clamping mechanism, which is smaller than the outside diameter of the handlebar **102**. As a result, the required shifting torque is lower than in prior twist shifters having a spool rotating around the handlebar **102**. The clamping mechanism **301** may feature alignment shoulders (not shown) that position the device **105** on the barends **103** such that sufficient space remains for a free rotation of the spool **401**. Moreover, the spool **401** may have an open cross section allowing it to be enlarged in diameter during its assembly. Thus, the portion of the clamping mechanism **301** along which the spool **401** rotates may be further reduced in diameter.

The spool **401** may be fabricated from sheet metal such that a spring feature **402** may be provided together with the spool **401** as a single monolithic structure. The spring feature **402** snaps into a plurality of positioning grooves **403** located within the inner circumference of the housing structure **201**. The grooves **403** are positioned in correspondence with required cable pull distances for shifting to different particular gears as is well known and the outer diameter of the spool **401**. The spool **401** has a first shoulder **411**, which is actuated by a compressive force exerted by the rotated gripdrum **206**. The compressive force is exerted on the shoulder **411** during up shifting where the shifter cable is pulled. The spring **402** has a second shoulder **412**, which is pressed via a portion of the gripdrum **206** (not shown) during down shifting, during which the shifter cable is released. The second shoulder **412** is placed in a fashion such that the spring **402** is forced out of a groove **403** when the second shoulder **412** is pressed. As a result, the torque required for down shifting has to be merely at a level sufficient to lift the spring **402** out of its groove **403**. The spring **402** may be designed to provide a resistive torque against inadvertent down shifting while snapped in one of the grooves **403**.

As illustrated in **Fig. 5**, the scope of the present invention includes embodiments in which a modified barend **501** is specifically configured to operate with the device **105**. In particular, since the tip of the barends **103** need to provide relatively little strength and/or stiffness compared to the more central handlebar portions where conventional prior art twist shifters are commonly attached, the tip may be recessed in diameter and/or particularly shaped in a fashion diverging from the main tubular section shape. In that way, the barend tip have a slightly reduced diameter as shown and may fixedly hold the spool **401** and/or may provide a well-known interface for attaching the housing structure **201**. The modified barend **501** may be a separate part to be attached on the handlebar **102** or it may be integral part of a correspondingly shaped handlebar **102**. In the embodiments with the modified barend, no clamping mechanism **301** may be required.

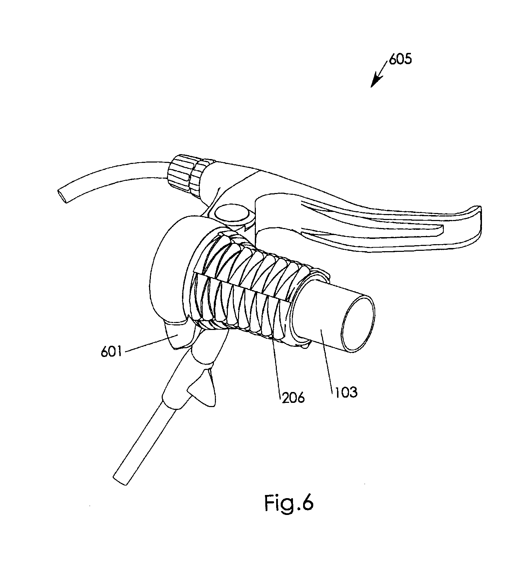

**Fig. 6** depicts a second embodiment of the present invention in which a well-known ratchet mechanism is provided. Such a well-known ratchet mechanism includes a first feature for transmitting a torque from a first lever on a modified spool while rotating in a first direction; a second feature for holding the modified spool in its rotational orientation against the cable force, while the first lever is released; and a third feature for releasing the spool in an angular amount that corresponds to a single shifting step of the attached derailleur. The third feature is commonly executed as a second lever. Conventional ratchet mechanisms have a main axis of revolution around which both first and second lever pivot.

In the second embodiment, the position of the device **605** at the tip of the barend **103** may be advantageously utilized for integrating a well-known ratchet mechanism adjacent to the tip of the barend **103**. The ratchet's main axis of revolution is thereby preferably brought into an orientation that is substantially concentric to a cylindrical tip of barend **103**. The first lever is replaced by the gripdrum **206** and the independently rotating thumb perch **601** replaces the second lever. The ratchet mechanism for converts a repeating back and forth rotation of the gripdrum **206** into a cable pulling rotation of the spool **401**, **902**, **1002**. A one-directional rotation blocking mechanism may block a free rotation of the spool **401**, **902**, **1002** in the cable releasing direction while allowing for a free rotation of the spool **401**, **902**, **1002** in the cable pulling direction. A release mechanism may release the blocking of the rotation blocker such that the spool **401**, **902**, **1002** may rotate into cable releasing direction while the release mechanism is actuated. The thumb perch **601** is part of the release mechanism for ergonomically actuating it by the thumb of the hand operating the shifter **605**. The ratchet mechanism may extending within the outside diameter of the barend 103 since it may be placed adjacent the tip of the barend **103**.

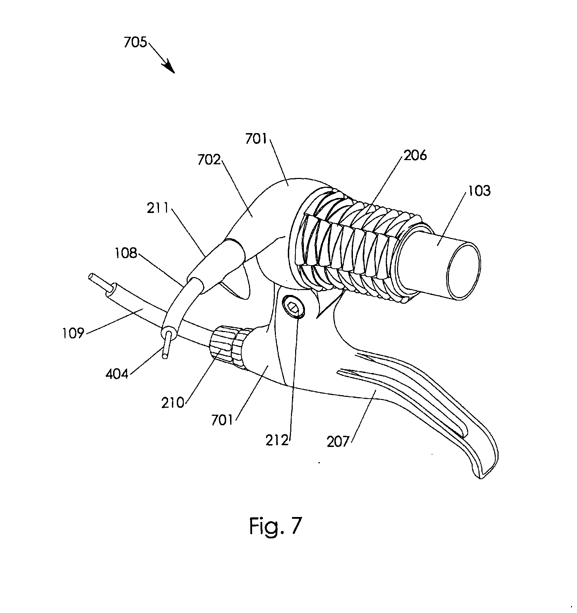

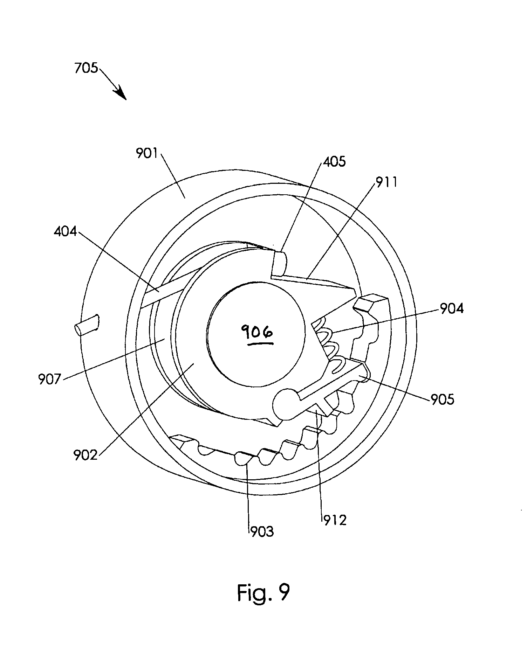

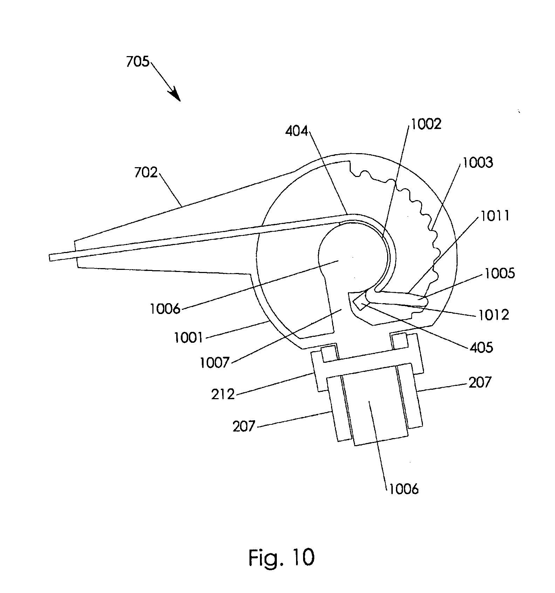

**Fig. 7 - 10** depict embodiments of the present invention, in which the pull direction of the spool **902**, **1002** (see **Figs. 9, 10**) is defined in a fashion such that a rotation in the direction of the index finger of a rider results in a pull on the shifter cable **404**. This has two advantages in combination with the barend position of the devices **705**, **805**. First, a housing neck **702**, **802** protrudes roughly tangentially and laterally from the upper portion of a cylindrical portion of the housing **701**, **801**. The cylindrical portion is preferably concentric to the outside diameter of the barend **103**. The position of the neck **702**, **802** corresponds ergonomically to a groove between the thumb and the index finger of the hands of a rider. As a result, a more reliable holding position on the barends **103** may be maintained, since the neck **702**, **802** prevents the hands from accidentally slipping off the barends **103**.

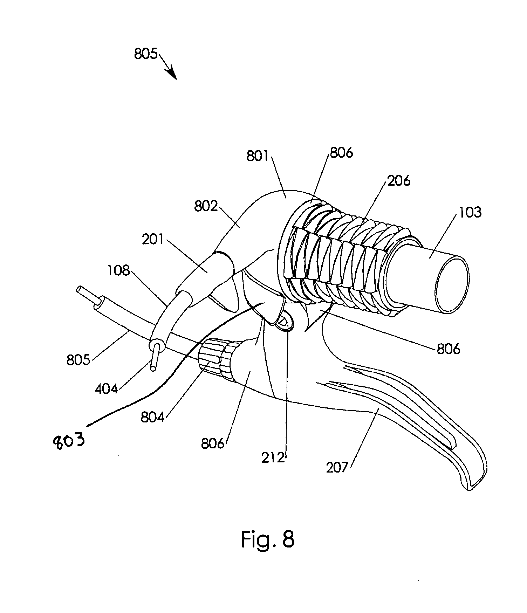

A second advantage is established in combination with a third embodiment of the invention as depicted in **Fig. 8**. There, an actuator housing **806** is rigidly combined with the gripdrum **206**, such that the entire brake actuator, including an actuator housing **806** and a lever **207** rotate together with the gripdrum **206**. Thus, the torque necessary to initiate a gear shifting operation may be transmitted thereby from one of the hands onto the gripdrum **206** and/or the brake lever **207.** The shifting torque results in a force on the brake lever **207** that is along the pivot axis of the lever **207** defined by the axle **212** such that the brake lever **207** may not be unintentionally moved during shifting. Having an inverted cable pull direction provides for an independently initiated braking and shifting in a substantially unchanged holding position of the hand and fingers on the barend **103**.

In the third embodiment, a ratchet mechanism is utilized as described under **Fig. 6**, such that the brake actuator **207** is rotated only in a relatively small angular range compared to that of the first embodiment with a continuously rotating gripdrum **206**. The shifter housing **801** remains rigidly connected to the barend **103**. A thumb perch **803** may extend laterally from the shifter housing **801** in a region beneath the neck **802** where it can be pushed by the thumb in a fashion that corresponds to a natural holding position on the barend **103**. In order to decouple the rotational movement of the brake actuator **207** from the cable housing **805**, a rotating joint may be optionally included in the adjustment screw **804**.

**Figs. 9** and **10** schematically illustrate exemplary configurations of some internal shifter components as they may be utilized in the first embodiment of the invention. In **Fig. 9**, a spool structure **902** rotates around a central portion **906**, which may be part of the central fixture **301**, or a modified barend **501**, or the shifter housing **901**. The spool structure **902** has a spool groove **907** into which the shifter cable **404** is positioned while the spool structure **902** is rotated by pressing on the shoulder **911**. A substantially rigid pawl **905** hinges in the spool structure **902** and is pushed by an elastic member **904**, such as a spring, against the groove profile **903**. During up shifting, a pressure is exerted on a shoulder **911** high enough to overcome the preload of the shifter cable **404** and to force the pawl **905** against the elastic member **904** out of a snap position defined by one of the groove profile's **903** grooves. During down shifting, a pressure is exerted on a shoulder **912** of the pawl initiating a rotation of the pawl **905**. Once the pawl **905** is rotated out of it's snap position, the spool structure **902** is rotated by the remaining pressure on the shoulder **912** and/or the preload of the shifter cable **404** or is rotated by a dedicated down shifting spring member (not shown).

Since no clamping mechanism needs to be integrated inside the housing **901** and since the diameter of the central portion **906** may be kept relatively small compared to that of a conventional handlebar, all described functional shifter parts **902, 903, 904, 905, 906, 907, 911, 912** may be configured such that the shifter cable **404** is spooling within the height of the groove profile **903** rather than adjacent as commonly practiced in the prior art. The result is a highly compact shifting mechanism and a shifter housing **901** the cylindrical portion of which has an outer diameter of up too less than 40 mm.

**Fig. 10** shows another embodiment in which a modified pawl **1005** is combined with a spool structure **1002** into a monolithic structure made from a material that is sufficiently stiff such that the pawl **1005** may operate with sufficient stiffness. The material is also sufficiently elastic such that it can deflect elastically in the interface between pawl **1005** and spool structure **1002** during rotation of the pawl **1005**. Such material may be for example a polyethylene. The shifter cable **404** is guided through the interface such that the enlarged cable end **405** holds itself on the opposing end and against the pulling force of the cable **404**. The spool structure **1002** has an arc like shape that provides for a simple assembly thereof. The spool structure **1002** wraps sufficiently around the central portion **1006** to snugly contact it in all shifting positions. A shoulder **1011** operates as described for shoulder **911** in **Fig. 9**. A shoulder **1012** operates as described for shoulder **912** in **Fig. 9**.

The highly compact design of the spool structure **1002** provides also for a cable spooling within the groove height as described under **Fig. 9**. In addition, the minimal space consumption of the spool structure **1002** provides sufficient space for other well-known elements of a shifting mechanism within the cylindrical portion of the shifter housing **1001**. Such additional elements may be part of a ratchet mechanism as described for the second and third embodiments. Also, a structural element **1007** may be integrated that bridges directly between the central portion **1006** and the housing **1001** of the brake actuator, which assists in optimizing the stiffness of the entire device **705.** Further more, the axle **212** may be brought within the outside contour of the barend **103** and into closest proximity to the central portion **1006**. This assists additionally in optimizing the geometric arrangement of the hand operated moving parts, such that shifting and braking may by performed in a comfortably and ergonomically optimized while holding on the barends **103**.

The scope of the invention includes embodiments, in which the devices **105**, **605**, **705** or **805** are provided without brake actuator. The scope of the invention includes embodiments, in which the devices **105**, **605**, **705** or **805** are integral part of a barend readily attachable to the peripheral ends of a handlebar **102**. The scope of the invention includes embodiments, in which the devices **105, 605**, **705** or **805** are integral part of a modified handle bar having tips and outside diameter of an adjacent cylindrical section pointing substantially into steering direction when mounted on a bicycle **101**.

Accordingly, the scope of the invention described in the specification above is set forth by the following claims and their legal equivalent.

## Claims

1. A shifting device comprising:
a) a housing configured for positioning at a tip of a profile and for attaching to said profile;
b) a gripdrum rotatable combined with said housing for a rotatable access of said gripdrum around an outside diameter of said profile during said positioning of said housing; and
c) a spool in a functional connection with said gripdrum and rotatable embedded in said housing for pulling a derailleur actuating cable, said spool having a bushing diameter being smaller than said outside diameter.

2. The shifting device of claim 1, wherein said profile is a barend.

3. The shifting device of claim 1 or 2, further comprising a brake actuator combined with said housing such that a brake lever is ergonomically accessed by a hand operating said grip drum.

4. The shifting device of claim 3, wherein a pivot pin around which said brake lever pivots extends within said outside diameter.

5. The shifting device of one of claims 1 to 4, wherein said housing further comprises a clamping mechanism having a clamping diameter for attaching the housing at an inside diameter of said profile.

6. The shifting device of claim 5, wherein said bushing diameter corresponds to said clamping diameter and wherein said spool is rotatable embedded around said clamping mechanism.

7. The shifting device of one of claims 1 to 6, wherein said functional connection includes:
a) a ratchet mechanism for converting a repeating back and forth rotation of said gripdrum into a cable pulling rotation of said spool, said ratchet mechanism extending within said outside diameter;
b) a one-directional rotation blocker for blocking a free rotation of said spool in a cable releasing direction while allowing for a free rotation of said spool in a cable pulling direction; and
c) a release mechanism for releasing said blocking of said rotation blocker such that said spool may rotate into said cable releasing direction while said release mechanism is actuated.

8. The shifting device of claim 7, wherein said release mechanism is actuated by a thumb perch.

9. The shifting device of one of claims 1 to 8, wherein said housing further comprises a housing neck having a position and an orientation that is roughly tangential and laterally protruding from an upper portion of a cylindrical portion of said housing, said position and said orientation ergonomically corresponding to a groove between the thumb and the index finger of a hand operating said shifting device.

10. The shifting device of claim 9, wherein said cylindrical portion is substantially concentric to said outside diameter.

11. A combined shifting and braking actuator comprising:
a) a shifting device including:
i) a housing configured for positioning at a tip of a profile and for attaching to said profile;
ii) a gripdrum rotatable combined with said housing for a rotatable access of said gripdrum around an outside diameter of said profile during said positioning of said housing;
iii) a spool in a functional connection with said gripdrum and rotatable embedded in said housing for pulling a derailleur actuating cable, said spool having a bushing diameter being smaller than said outside diameter; and
b) a brake actuator combined with said housing such that a brake lever is ergonomically accessed by a hand operating said grip drum.

12. The device of claim 11, wherein a pivot pin around which said brake lever pivots extends within said outside diameter.

13. The device of claim 11 or 12, wherein said profile is a barend.

14. The device of one of claims 11 to 13, wherein said housing further comprises a clamping mechanism having a clamping diameter for attaching the housing at an inside diameter of said profile.

15. The device of claim 14, wherein said bushing diameter corresponds to said clamping diameter and wherein said spool is rotatable embedded around said clamping mechanism.

16. The device of one of claims 11 to 15, wherein said functional connection includes:
a) a ratchet mechanism for converting a repeating back and forth rotation of said gripdrum into a cable pulling rotation of said spool, said ratchet mechanism extending within said outside diameter;
b) a one-directional rotation blocker for blocking a free rotation of said spool in a cable releasing direction while allowing for a free rotation of said spool in a cable pulling direction; and
c) a release mechanism for releasing said blocking of said rotation blocker such that said spool may rotate into said cable releasing direction while said release mechanism is actuated.

17. The device of claim 16, wherein said release mechanism is actuated by a thumb perch.

18. The device of one of claims 11 to 17, wherein said housing further comprises a housing neck having a position and an orientation that is roughly tangential and laterally protruding from an upper portion of a cylindrical portion of said housing, said position and said orientation ergonomically corresponding to a groove between the thumb and the index finger of a hand operating said shifting device.

19. The device of claim 18, wherein said cylindrical portion is substantially concentric to said outside diameter.

20. The device of one of claims 11 to 19, wherein said profile is a handlebar with said tip and said outside diameter pointing substantially into steering direction.

21. A barend for mounting at the peripheral ends of a handle bar, said barend comprising:
a) a shifting device including:
i) a housing configured for positioning at a tip of said barend and for attaching to said barend;
ii) a gripdrum rotatable combined with said housing for a rotatable access of said gripdrum around an outside diameter of said barend during said positioning of said housing;
iii) a spool in a functional connection with said gripdrum and rotatable embedded in said housing for pulling a derailleur actuating cable, said spool having a bushing diameter being smaller than said outside diameter; and
b) a brake actuator combined with said housing such that a brake lever is ergonomically accessed by a hand operating said grip drum.

22. The barend of claim 21, wherein a pivot pin around which said brake lever pivots extends within said outside diameter.

23. The barend of claim 21 or 22, wherein said housing further comprises a clamping mechanism having a clamping diameter for attaching the housing at an inside diameter of said barend.

24. The barend of claim 23, wherein said bushing diameter corresponds to said clamping diameter and wherein said spool is rotatable embedded around said clamping means.

25. The barend of one of claims 21 to 24, wherein said functional connection
a) a ratchet mechanism for converting a repeating back and forth rotation of said gripdrum into a cable pulling rotation of said spool, said ratchet mechanism extending within said outside diameter;
b) a one-directional rotation blocker for blocking a free rotation of said spool in a cable releasing direction while allowing for a free rotation of said spool in a cable pulling direction; and
c) a release mechanism for releasing said blocking of said rotation blocker such that said spool may rotate into said cable releasing direction while said release mechanism is actuated.

26. The barend of claim 25, wherein said release mechanism is actuated by a thumb perch.

27. The barend of one of claims 21 to 26, wherein said housing further comprises a housing neck having a position and an orientation that is roughly tangential and laterally protruding from an upper portion of a cylindrical portion of said housing, said position and said orientation ergonomically corresponding to a groove between the thumb and the index finger of a hand operating said shifting device.

28. The barend of claim 27, wherein said cylindrical portion is substantially concentric to said outside diameter.

29. The barend of one of claims 21 to 28 being integral part of a handlebar.

30. A bicycle comprising a shifting device including:
d) a housing configured for positioning at a tip of a barend and for attaching to said barend;
e) a gripdrum rotatable combined with said housing for a rotatable access of said gripdrum around an outside diameter of said barend during said positioning of said housing; and
f) a spool in a functional connection with said gripdrum and rotatable embedded in said housing for pulling a derailleur actuating cable, said spool having a bushing diameter being smaller than said outside diameter.

31. The bicycle of claim 30, further comprising a brake actuator combined with said housing such that a brake lever is ergonomically accessed by a person operating said bicycle.

32. The bicycle of claim 31, wherein a pivot pin around which said brake lever pivots extends within said outside diameter.

33. The bicycle of one of claims 30 to 32, wherein said housing further comprises a clamping mechanism having a clamping diameter for attaching the housing at an inside diameter of said barend.

34. The bicycle of claim 33, wherein said bushing diameter corresponds to said clamping diameter and wherein said spool is rotatable embedded around said clamping mechanism.

35. The bicycle of one of claims 30 to 34, wherein said functional connection
d) a ratchet mechanism for converting a repeating back and forth rotation of said gripdrum into a cable pulling rotation of said spool, said ratchet mechanism extending within said outside diameter;
e) a one-directional rotation blocker for blocking a free rotation of said spool in a cable releasing direction while allowing for a free rotation of said spool in a cable pulling direction; and
f) a release mechanism for releasing said blocking of said rotation blocker such that said spool may rotate into said cable releasing direction while said release mechanism is actuated.

36. The bicycle of claim 35, wherein said release mechanism is actuated by a thumb perch.

37. The bicycle of one of claims 30 to 36, wherein said housing further comprises a housing neck having a position and an orientation that is roughly tangential and laterally protruding from an upper portion of a cylindrical portion of said housing, said position and said orientation ergonomically corresponding to a groove between the thumb and the index finger of a hand of a person operating said bicycle.

38. The bicycle of claim 37, wherein said cylindrical portion is substantially concentric to said outside diameter.
